# EUROPEAN PATENT SPECIFICATION

(11) **EP 3 476 777 B1**
(45) Date of publication and mention of the grant of the patent: **27.03.2024**
(21) Application number: 18201948.9
(22) Date of filing: 23.10.2018
(51) Int. Cl.: B65G 47/14

(54) **FEEDING SYSTEM**
ZUFÜHRSYSTEM
SYSTÈME D'ALIMENTATION

(30) Priority: 25.10.2017 CN 201711007227
(43) Date of publication of application: 01.05.2019
(73) Proprietor: Tyco Electronics (Shanghai) Co., Ltd., China (Shanghai) Pilot Free Trade Zone Shanghai (CN); TE Connectivity Solutions GmbH, 8200 Schaffhausen (CH); Kunshan League Automechanism Co., Ltd., Kunshan City Jiangsu (CN); Tyco Electronics Polska Sp. z.o.o., 02-677 Warsaw (PL)
(72) Inventor: DENG, Yingcong, Shanghai, 200233 (CN); KOWALSKI, Jaroslaw, 85-059 Bydgoszcz (PL); PRZYBYLSKI, Andrzej, 85-059 Bydgoszcz (PL); GRZEBSKI, Jaroslaw, 85-059 Bydgoszcz (PL); ZHANG, Dandan, Shanghai, 200233 (CN); HU, Lvhai, Shanghai, 200233 (CN); XIE, Fengchun, Shanghai, 200233 (CN); LIU, Yun, Shanghai, 200233 (CN); LU, Roberto Francisco-Yi, Bellvue, WA Washington 98006 (US); WU, Haidong, Kunshan City, Jiangsu (CN); XIAO, Hui, Kunshan City, Jiangsu (CN)
(74) Representative: Grünecker Patent- und Rechtsanwälte PartG mbB

(56) References cited:
- EP-A1- 1 281 643
- CN-A- 107 098 122
- CN-U- 203 612 592
- GB-A- 2 390 591
- JP-A- H06 238 584
- US-A- 2 209 340
- US-A1- 2003 042 112
- US-A1- 2008 149 460

## Description

### FIELD OF THE DISCLOSURE

The disclosure relates to a feeding system including: a hopper adapted to accommodate a plurality of different types of products; a conveyor belt located above the hopper and configured to convey the products; and a lifting mechanism adapted to lift the products in the hopper onto the conveyor belt, wherein the lifting mechanism includes: a transferring belt circulating around an annular path; and a plurality of step plates evenly spaced along the annular path of the transferring belt. The step plates are adapted to carry one or more of the products, and the transferring belt is configured to drive the step plates to circulate around the annular path, so as to lift the products from the hopper onto the conveyor belt.

### DESCRIPTION OF THE RELATED ART

In the field of electronic manufacturing, it may be usually necessary to mount various products, such as electronic components, various chips or semi-finished products, onto a circuit board. In order to improve assembly efficiency, in the related art, a feeding system is usually used to feed various products, and the feeding system usually includes a hopper, a vibration tray and a conveyor belt. The hopper is used to accommodate the products. The products may fall from a discharge port of the hopper onto the vibration tray which vibrates to change posture of the products so that the products are in an identifiable posture and the products are transferred by the conveyor belt to a pick-up station of a manipulator.

However, in the existing feeding system, the products discharged from the hopper are easily entangled and difficult to be separated, so that the products may be easily accumulated on the vibration tray or the conveyor belt, which reduces the feeding efficiency of the products.

EP 1 281 643 A1 relates to a machine for orienting articles having a different geometric configuration at one of their ends, such as bottles. The bottles are lifted from a container onto a conveyor belt and are oriented and aligned via the machine.

An automatic feeding device for lathes and other wood-turning machinery, wherein the wood may be correctly fed to a lathe without risk of injury to the operator is disclosed in US 2209 340 A.

A machine for separating textiles from a pile of textile items is shown in US 2008/149460 A1. The apparatus comprises a textile collection area, a textile receiving area, a lifting mechanism having an inclined face and a pick member projecting from the face of the transport mechanism. The pick member separates and carries the textile item from the plurality of textile items to the textile receiving area.

A further feeding system is disclosed in GB 2 390 591 A, in which a row of sliced products, e.g. sliced tomatoes in the food handling industry, is formed. Feeding systems utilizing reciprocating conveyors are for example disclosed in JPH06 238584 A.

Feeding systems utilizing vibratory feeders are for example disclosed in CN 107 098 122 A and US 2003/0042112 A1. In US 2003/0042112 A1, , a part supply feeder or flighted belt conveyor lifts parts from a hopper in a metered fashion to a transfer area, where it supplies parts to a vibratory feeder. US2003/0042112 A1 discloses a feeding system according to the preamble of claim 1.

### SUMMARY

In an aspect, it is provided a feeding system of the above mentioned kind that further includes a vibration generator adapted to drive the conveyor belt to vibrate in at least one direction so as to change the postures of at least a part of the products on the conveyor belt from an unidentifiable posture into an identifiable posture. The feeding system further includes a sliding passage disposed obliquely with respect to a horizontal plane and a guiding baffle disposed obliquely with respect to a conveying direction of the conveyor belt and adapted to direct the products on the conveyor belt into the sliding passage. When the products on the conveyor belt are directed into the sliding passage, the products are slidable along the sliding passage into the hopper by their own weights.

Optionally, the lifting mechanism further includes a roller on which the transferring belt is tensioned and which is rotatable about its axis to drive the transferring belt to move along the annular path.

Optionally, the transferring belt is disposed obliquely with respect to a horizontal plane such that an angle of less than 90 degrees is formed between the transferring belt and the horizontal plane.

Optionally, the step plates are parallel to a width direction of the transferring belt and perpendicular to a surface of the transferring belt.

Optionally, the feeding system further includes a product posture filter adapted to change postures of at least a part of the products on the conveyor belt from an unidentifiable posture into an identifiable posture.

Optionally, the product posture filter includes a flexible stopper which spans the conveyor belt such that there is a predetermined distance between the flexible stopper and the surface of the conveyor belt. When the product on the conveyor belt is in the identifiable posture, a height of the product is equal to or less than the predetermined distance such that the product is not blocked by the flexible stopper and is allowed to pass through the flexible stopper; and when the product on the conveyor belt is in the unidentifiable posture, a height of the product is greater than the predetermined distance such that the product is blocked by the flexible stopper and is flipped from the unidentifiable posture into the identifiable posture under effect of push from the flexible stopper.

Optionally, the flexible stopper is movable in a vertical direction such that the distance between the flexible stopper and the surface of the conveyor belt is adjustable and such that the product posture filter is applicable to different products.

Optionally, the flexible stopper is a flexible brush made of flexible hairs.

Optionally, the product posture filter further includes a pair of support columns disposed on two sides of the conveyor belt and a crossbar disposed on the pair of support columns, the flexible stopper being rotatably coupled to the crossbar.

Optionally, the feeding system further includes a vision system adapted to identify positions and the postures of the products on the conveyor belt.

Optionally, the vision system is adapted to only identify the positions and the postures of the products in the identifiable posture and not to identify the positions and the postures of the products in the unidentifiable posture.

Optionally, the identifiable posture includes a recumbent posture or a half-recumbent posture, and the unidentifiable posture includes an upright posture.

Optionally, the vision system includes a vertical moving mechanism and a camera mounted on the vertical moving mechanism, the vertical moving mechanism driving the camera to move up and down in a vertical direction to adjust a distance between the camera and the products.

Optionally, the vertical moving mechanism includes a vertical support bar on which a vertical sliding rail is formed and a slider which is slidably mounted on the vertical sliding rail and is slidable up and down along the vertical sliding rail; and the camera is mounted on the slider and is movable in the vertical direction with the slider.

Optionally, the feeding system further includes a manipulator adapted to pick up the products in the identifiable posture from the conveyor belt under guidance of the vision system.

Optionally, the feeding system further includes a vibrator that drives the sliding passage to vibrate to ensure that the products in the sliding passage are smoothly slidable into the hopper.

Optionally, the conveyor belt has a normal mode and a clear mode. When the conveyor belt is in the normal mode, the conveyor belt conveys the products forward at a first speed; and when the conveyor belt is in the clear mode, the conveyor belt conveys the products forward at a second speed greater than the first speed such that the products on the conveyor belt are quickly returned to the hopper via the sliding passage.

Optionally, the hopper includes a housing and a drawer that is withdrawable from the housing to quickly remove the products remaining in the hopper.

### BRIEF DESCRIPTION OF THE DRAWINGS

Fig.1 shows a schematic perspective view of a feeding system in accordance with an exemplary embodiment of the present disclosure; and
FIG. 2 shows a schematic perspective view of a portion of the feeding system in FIG. 1.

### DETAILED DESCRIPTION OF EMBODIMENTS

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In addition, in the following detailed description, for purposes of explanation, numerous specific details are set forth in order to provide a thorough understanding of the disclosed embodiments. However, it is apparent that one or more embodiments may also be implemented without these specific details. In other instances, well-known means and devices are schematically shown in the drawings to simplify the drawings.

According to a general technical concept of the present disclosure, there is provided a feeding system including: a hopper adapted to accommodate a plurality of different types of products; a conveyor belt located above the hopper and configured to convey the products; and a lifting mechanism adapted to lift the products in the hopper onto the conveyor belt. The lifting mechanism includes a transferring belt that may be circulated around an annular path and a plurality of step plates that are evenly spaced along the annular path of the transferring belt. The step plates are adapted to carry one or more of the products, the transferring belt being used to drive the step plate to be circulated around the annular path so as to lift the products from the hopper onto the conveyor belt.

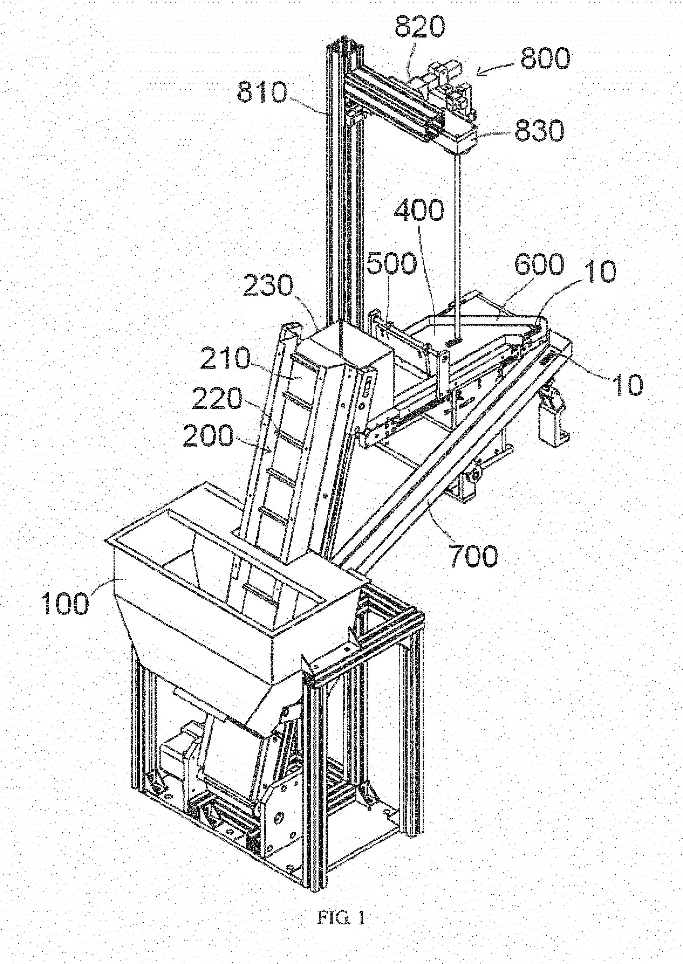

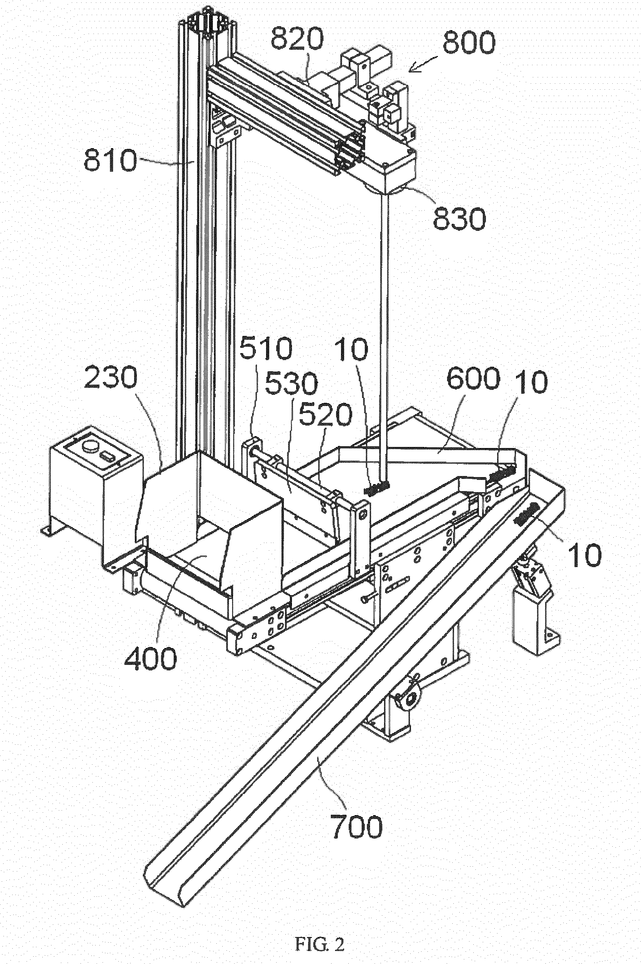

FIG. 1 shows a schematic perspective view of a feeding system in accordance with an exemplary embodiment of the present disclosure; and FIG. 2 shows a schematic perspective view of a portion of the feeding system shown in FIG. 1.

As shown in FIGS. 1 and 2, in the illustrated embodiment, the feeding system mainly includes a hopper 100, a conveyor belt 400 and a lifting mechanism 200. The hopper 100 is adapted to accommodate a variety of different types of products 10, such as electronic components, various chips or semi-finished products, and the like. The conveyor belt 400 is located above the hopper 100 and configured to convey the products 10. The lifting mechanism 200 is adapted to lift the products 10 in the hopper 100 onto the conveyor belt 400.

As shown in FIG. 1, in the illustrated embodiment, the lifting mechanism 200 mainly includes a transferring belt 210 and a plurality of step plates 220. The transferring belt 210 may circulate around an annular path. The plurality of step plates 220 are evenly spaced along the annular path of the transferring belt 210, i.e., arranged in a stair manner. Each step plate 220 is adapted to carry one or more product 10 from the hopper 100. The transferring belt 210 is used to drive the step plates 220 to circulate around the annular path to lift the products 10 carried on the step plates 220 onto the conveyor belt 400. As shown in FIG. 1, when the step plate 220 is moved to the top of the lifting mechanism 200, the products 10 carried on the step plate 220 falls automatically onto the conveyor belt 400 by gravity.

In an exemplary embodiment of the disclosure, the lifting mechanism 200 further includes a roller on which the transferring belt 210 is tensioned and which is rotatable about its axis to drive the transferring belt 210 to move along the annular path.

As shown in FIG 1, in the illustrated embodiment, the transferring belt 210 is disposed obliquely with respect to the horizontal plane such that an angle of less than 90 degrees is formed between the transferring belt 210 and the horizontal plane.

As shown in FIG 1, in the illustrated embodiment, the step plates 220 are parallel to a width direction of the transferring belt 210 and perpendicular to a surface of the transferring belt 210. Thus, it may be ensured that the products 10 carried on the step plates 220 will not slip down.

As shown in FIGS. 1 and 2, in the illustrated embodiment, the feeding system further includes a product posture filter 500 adapted to change postures of at least a part of the products 10 on the conveyor belt 400 such that it is possible for the at least a part of the products 10 to change from an unidentifiable posture (which refers to a posture that cannot be identified by a vision system 800) into an identifiable posture (which refers to a posture that may be identified by the vision system 800).

As shown in FIGS. 1 and 2, in the illustrated embodiment, the product posture filter 500 includes a flexible stopper 530 that spans the conveyor belt 400. There is a predetermined distance between the flexible stopper 530 and the surface of the conveyor belt 400. When one product 10 is in the identifiable posture, a height of the product 10 is equal to or less than the predetermined distance so that the product 10 is not blocked by the flexible stopper 530 and may smoothly pass through the flexible stopper 530. When one product 10 is in the unidentifiable posture, a height of the product 10 is greater than the predetermined distance such that the product 10 is blocked by the flexible stopper 530 and flipped from the unidentifiable posture into the identifiable posture under effect of push from the flexible stopper 530.

As shown in FIGS. 1 and 2, in an exemplary embodiment of the present disclosure, the flexible stopper 530 is movable in a vertical direction such that the distance between the flexible stopper 530 and the surface of the conveyor belt 400 is adjustable. In this way, the product posture filter 500 is applicable to different products 10.

In an exemplary embodiment of the disclosure, the aforementioned flexible stopper 530 may be a flexible brush made of flexible hairs. However, the present disclosure is not limited thereto, and the aforementioned flexible stopper 530 may also be a flexible belt.

As shown in FIGS. 1 and 2, in the illustrated embodiment, the product posture filter 500 further includes a pair of support columns 510 disposed on two sides of the conveyor belt 400 and a crossbar 520 disposed on the pair of support columns 510. The flexible stopper 530 is rotatably coupled to the crossbar 520.

As shown in FIGS. 1 and 2, according to the invention, the feeding system further includes a vibration generator adapted to drive the conveyor belt 400 to vibrate in at least one direction so as to change the postures of at least a part of the products 10 on the conveyor belt 400 such that the at least a part of the products 10 are changeable from the unidentifiable posture to the identifiable posture.

As shown in FIGS. 1 and 2, in the illustrated embodiment, the feeding system further includes a vision system 800 adapted to identify positions and the postures of the products 10 on the conveyor belt 400.

As shown in FIGS. 1 and 2, in the illustrated embodiment, the vision system 800 may only identify the positions and the postures of the products in the identifiable posture, but may not identify the positions and the postures of the products in the unidentifiable posture.

In an exemplary embodiment of the disclosure, the identifiable posture of the products includes a recumbent posture or a half-recumbent posture, and the unidentifiable posture includes an upright posture.

As shown in FIGS. 1 and 2, in the illustrated embodiment, the vision system 800 includes a vertical moving mechanism 810, 820 and a camera 830 mounted on the vertical moving mechanism 810, 820. The vertical moving mechanism 810, 820 may drive the camera 830 to move up and down in the vertical direction to adjust the distance between the camera 830 and the products 10.

As shown in FIGS. 1 and 2, in the illustrated embodiment, the vertical moving mechanism 810, 820 includes a vertical support bar 810 on which a vertical sliding rail is formed and a slider 820 slidably mounted on the vertical sliding rail and slidable up and down along the vertical sliding rail. The camera 830 is mounted on the slider 820 and is movable in the vertical direction with the slider 820.

As shown in FIGS. 1 and 2, in the illustrated embodiment, the feeding system further includes a manipulator adapted to pick up the products 10 in the identifiable posture from the conveyor belt 400 under guidance of the vision system 800.

As shown in FIGS. 1 and 2, according to the invention, the feeding system further includes a sliding passage 700 disposed obliquely with respect to the horizontal plane and a guiding baffle 600 disposed obliquely with respect to a conveying direction of the conveyor belt 400. The guiding baffle 600 is adapted to direct the products 10 on the conveyor belt 400 into the sliding passage 700.

As shown in FIGS. 1 and 2, according to the invention, when the products 10 on the conveyor belt 400 are directed into the sliding passage 700, the products 10 are slidable along the sliding passage 700 into the hopper 100 by their own weights.

In another exemplary embodiment of the present disclosure, the feeding system may further include a vibrator that may drive the sliding passage 700 to vibrate to ensure that the products 10 in the sliding passage 700 are smoothly slidable into the hopper 100. Thus, even if the self-weights of the products 10 are insufficient to drive the products 10 to slide in the sliding passage 700, that is to say, even if the friction between the products 10 and the sliding passage 700 is greater than the sliding force generated by the weights of the products 10, it can be ensured that the products 10 will smoothly slide into the hopper 100.

In another exemplary embodiment of the disclosure, the conveyor belt 400 has a normal mode and a clear mode. When the conveyor belt 400 is in the normal mode, the conveyor belt 400 conveys the products 10 forward at a first speed. When the conveyor belt 400 is in the clear mode, the conveyor belt 400 conveys the products 10 forward at a second speed greater than the first speed so that the products 10 on the conveyor belt 400 may be quickly returned to the hopper 100 via the sliding passage 700, thereby quickly removing the products 10 remaining on the conveyor belt 400.

In another exemplary embodiment of the present disclosure, the hopper 100 includes a housing and a drawer that is withdrawable from the housing to quickly remove the products remaining in the hopper 100. Then new products may be loaded.

As shown in FIGS. 1 and 2, in the illustrated embodiment, in order to prevent the products 10 carried on the step plates 220 from slipping down, the lifting mechanism 200 further includes an outer cover 230 mounted outside the transferring belt 210 and the step plates 220. It should be noted that, in FIGS. 1 and 2, only a portion of the outer cover 230 is shown in order to show the transferring belt 210 and the step plates 220 therein.

Those skilled in the art can understand that the above-described embodiments are all exemplary and they may be modified by those skilled in the art without departing from the scope of the invention as defined in the appended claims. The structures described in the various embodiments can be freely combined without a conflict in structure or principle.

Although the present disclosure has been described with reference to the accompanying drawings, the embodiments disclosed in the accompanying drawings are intended to illustrate the preferred embodiments of the present disclosure exemplarily, and cannot be construed as a limitation of the present disclosure.

It should be noted that the wording "include", "including", "comprise", or "comprising" does not exclude other elements or steps, and the wording "a" or "an" does not exclude plural elements listed behind the wording. In addition, any reference sign in the claims will not be construed as a limitation to the scope of the present disclosure.

## Claims

1. A feeding system comprising:
a hopper (100) adapted to accommodate a plurality of different types of products (10);
a conveyor belt (400) located above the hopper (100) and configured to convey the products (10); and
a lifting mechanism (200) adapted to lift the products (10) in the hopper (100) onto the conveyor belt (400),
wherein the lifting mechanism (200) comprises:
a transferring belt (210) circulating around an annular path; and
a plurality of step plates (220) evenly spaced along the annular path of the transferring belt (210),
wherein the step plates (220) are adapted to carry one or more of the products (10), and the transferring belt (210) is configured to drive the step plates (220) to circulate around the annular path so as to lift the products (10) from the hopper (100) onto the conveyor belt (400), **characterized in that** the feeding system further comprises a vibration generator adapted to drive the conveyor belt (400) to vibrate in at least one direction so as to change postures of at least a part of the products (10) on the conveyor belt (400) from an unidentifiable posture into an identifiable posture and **in that** the feeding system further comprises a sliding passage (700) disposed obliquely with respect to a horizontal plane and a guiding baffle (600) disposed obliquely with respect to a conveying direction of the conveyor belt (400) and adapted to direct the products (10) on the conveyor belt (400) into the sliding passage (700), wherein when the products (10) on the conveyor belt (400) are directed into the sliding passage (700), the products (10) are slidable along the sliding passage (700) into the hopper (100) by their own weights.

2. The feeding system according to claim 1,
wherein the lifting mechanism (200) further comprises a roller on which the transferring belt (210) is tensioned and which is rotatable about its axis to drive the transferring belt (210) to move along the annular path.

3. The feeding system according to claim 2,
wherein the transferring belt (210) is disposed obliquely with respect to a horizontal plane such that an angle of less than 90 degrees is formed between the transferring belt (210) and the horizontal plane.

4. The feeding system according to claim 3,
wherein the step plates (220) are parallel to a width direction of the transferring belt (210) and perpendicular to a surface of the transferring belt (210).

5. The feeding system according to claim 1,
wherein the feeding system further comprises a product posture filter (500) adapted to change postures of at least a part of the products (10) on the conveyor belt (400) from an unidentifiable posture into an identifiable posture.

6. The feeding system according to claim 5,
wherein the product posture filter (500) comprises a flexible stopper (530) which spans the conveyor belt (400) such that there is a predetermined distance between the flexible stopper (530) and the surface of the conveyor belt (400), in particular the flexible stopper (530) is a flexible brush made of flexible hairs;
wherein when the product (10) on the conveyor belt (400) is in the identifiable posture, a height of the product (10) is equal to or less than the predetermined distance such that the product (10) is not blocked by the flexible stopper (530) and is allowed to pass through the flexible stopper (530); and
wherein when the product (10) on the conveyor belt (400) is in the unidentifiable posture, a height of the product (10) is greater than the predetermined distance such that the product (10) is blocked by the flexible stopper (530) and is flipped from the unidentifiable posture into the identifiable posture under effect of push from the flexible stopper (530).

7. The feeding system according to claim 6,
wherein the flexible stopper (530) is movable in a vertical direction such that the distance between the flexible stopper (530) and the surface of the conveyor belt (400) is adjustable and such that the product posture filter (500) is applicable to different products (10).

8. The feeding system according to claim 6,
wherein the product posture filter (500) further comprises a pair of support columns (510) disposed on two sides of the conveyor belt (400) and a crossbar (520) disposed on the pair of support columns (510), the flexible stopper (530) being rotatably coupled to the crossbar (520).

9. The feeding system according to claim 5,
wherein the feeding system further comprises a vision system (800) adapted to identify positions and the postures of the products (10) on the conveyor belt (400), in particular the feeding system further comprises a manipulator adapted to pick up the products (10) in the identifiable posture from the conveyor belt (400) under guidance of the vision system (800).

10. The feeding system according to claim 9,
wherein the vision system (800) is adapted to only identify the positions and the postures of the products in the identifiable posture and not to identify the positions and the postures of the products in the unidentifiable posture, in particular the identifiable posture comprises a recumbent posture or a half-recumbent posture and the unidentifiable posture comprises an upright posture.

11. The feeding system according to claim 9,
wherein the vision system (800) comprises a vertical moving mechanism (810, 820) and a camera (830) mounted on the vertical moving mechanism (810, 820), the vertical moving mechanism (810, 820) driving the camera (830) to move up and down in a vertical direction to adjust a distance between the camera (830) and the products (10).

12. The feeding system according to claim 11,
wherein the vertical moving mechanism (810, 820) comprises a vertical support bar (810) on which a vertical sliding rail is formed and a slider (820) which is slidably mounted on the vertical sliding rail and is slidable up and down along the vertical sliding rail; and
wherein the camera (830) is mounted on the slider (820) and is movable in the vertical direction with the slider (820).

13. The feeding system according to claim 1,
wherein the feeding system further comprises a vibrator that drives the sliding passage (700) to vibrate to ensure that the products (10) in the sliding passage (700) are smoothly slidable into the hopper (100).

14. The feeding system according to claim 1,
wherein the conveyor belt (400) has a normal mode in which the conveyor belt (400) conveys the products (10) forward at a first speed and a clear mode in which the conveyor belt (400) conveys the products (10) forward at a second speed greater than the first speed such that the products (10) on the conveyor belt (400) are quickly returned to the hopper (100) via the sliding passage (700).

15. The feeding system according to claim 1,
wherein the hopper (100) comprises a housing and a drawer that is withdrawable from the housing to quickly remove the products remaining in the hopper (100).

## Patentansprüche

1. Zuführsystem, mit:
einem Trichter (100), der ausgebildet ist, mehrere unterschiedliche Arten von Produkten (10) aufzunehmen;
einem Förderband (400), das über dem Trichter (100) angeordnet und ausgebildet ist, die Produkte (10) zu befördern; und
einem Hebemechanismus (200), der ausgebildet ist, die Produkte (10) in dem Trichter (100) auf das Förderband (400) zu heben,
wobei der Hebemechanismus (200) aufweist:
ein Überführungsband (210), das einen ringförmigen Förderweg entlang läuft; und
mehrere Stufenplatten (220), die gleichmäßig entlang des ringförmigen Förderwegs des Überführungsbands (210) mit Abstand angeordnet sind,
wobei die Stufenplatten (220) ausgebildet sind, ein oder mehrere der Produkte (10) zu tragen, und das Überführungsband (210) ausgebildet ist, die Stufenplatten (220) derart anzutreiben, dass diese den ringförmigen Förderweg derart umlaufen, dass die Produkte (10) aus dem Trichter (100) auf das Förderband (400) gehoben werden, **dadurch gekennzeichnet, dass** das Zuführsystem ferner einen Schwingungserzeuger aufweist, der ausgebildet ist, das Förderband (400) derart anzutreiben, dass es mindestens in einer Richtung derart schwingt, dass die Stellung mindestens eines Teils der Produkte (10) auf dem Förderband (400) aus einer nicht erkennbaren Stellung in eine erkennbare Stellung geändert wird, und dass das Zuführsystem ferner eine Gleitpassage (700) aufweist, die schräg in Bezug auf eine horizontale Ebene angeordnet ist, und ein Führungsablenkelement (600) aufweist, das in Bezug auf eine Förderrichtung des Förderbands (400) angeordnet und ausgebildet ist, die Produkte (10) auf dem Förderband (400) in die Gleitpassage (700) zu lenken, wobei, wenn die Produkte (10) auf dem Förderband (400) in die Gleitpassage (700) gelenkt werden, die Produkte (10) entlang der Gleitpassage (700) durch ihr Eigengewicht in den Trichter (100) verschiebbar sind.

2. Zuführsystem nach Anspruch 1,
wobei der Hebemechanismus (200) ferner eine Walze aufweist, an der das Überführungsband (210) gespannt wird und die um ihre Achse derart drehbar ist, dass sie das Überführungsband (210) antreibt, sich entlang dem ringförmigen Beförderungsweg zu bewegen.

3. Zuführsystem nach Anspruch 2,
wobei das Überführungsband (210) in Bezug auf eine horizontale Ebene derart schräg angeordnet ist, dass ein Winkel von kleiner als 90 Grad zwischen dem Überführungsband (210) und der horizontalen Ebene gebildet ist.

4. Zuführsystem nach Anspruch 3,
wobei die Stufenplatten (220) parallel zu einer Breitenrichtung des Überführungsbands (210) und senkrecht zu einer Oberfläche des Überführungsbands (210) angeordnet sind.

5. Zuführsystem nach Anspruch 1,
wobei das Zuführsystem ferner einen Produktstellungsfilter (500) aufweist, der ausgebildet ist, die Stellung mindestens eines Teils der Produkte (10) auf dem Förderband (400) ausgehend von einer nicht erkennbaren Stellung in eine erkennbare Stellung zu ändern.

6. Zuführsystem nach Anspruch 5,
wobei der Produktstellungsfilter (500) einen flexiblen Anschlag (530) aufweist, der sich über das Förderband (400) derart erstreckt, dass ein vorbestimmter Abstand zwischen dem flexiblen Anschlag (530) und der Oberfläche des Förderbands (400) entsteht, wobei insbesondere der flexible Anschlag (530) eine flexible Bürste ist, die aus flexiblen Haaren hergestellt ist;
wobei, wenn das Produkt (10) auf dem Förderband (400) in einer erkennbaren Stellung ist, eine Höhe des Produkts (10) gleich oder kleiner als der vorbestimmte Abstand ist derart, dass das Produkt (10) von dem flexiblen Anschlag (530) nicht blockiert wird und den flexiblen Anschlag (530) passieren kann; und
wobei, wenn das Produkt (10) auf dem Förderband (400) in einer nicht erkennbaren Stellung ist, eine Höhe des Produkts (10) größer als der vorbestimmte Abstand ist derart, dass das Produkt (10) von dem flexiblen Anschlag (530) blockiert und durch die Wirkung eines Stoßes durch den flexiblen Anschlag (530) aus der unerkennbaren Stellung in die erkennbare Stellung gebracht wird.

7. Zuführsystem nach Anspruch 6,
wobei der flexible Anschlag (530) in einer vertikalen Richtung derart bewegbar ist, dass der Abstand zwischen dem flexiblen Anschlag (530) und der Oberfläche des Förderbands (400) einstellbar ist, und derart, dass der Produktstellungsfilter (500) auf unterschiedliche Produkte (10) anwendbar ist.

8. Zuführsystem nach Anspruch 6,
wobei der Produktstellungsfilter (500) ferner zwei Stützsäulen (510) als Paar, die auf zwei Seiten des Förderbands (400) angeordnet sind, und einen Querstab (520) aufweist, der auf den beiden Stützsäulen (510) angeordnet ist, wobei der flexible Anschlag (530) drehbar mit dem Querstab (520) verbunden ist.

9. Zuführsystem nach Anspruch 5,
wobei das Zuführsystem ferner ein Bildgebungssystem (800) aufweist, das ausgebildet ist, Positionen und die Stellungen der Produkte (10) auf dem Förderband (400) zu erkennen, wobei insbesondere das Zuführsystem ferner eine Betätigungseinheit aufweist, die ausgebildet ist, die Produkte (10) in der erkennbaren Stellung unter Führung des Bildgebungssystems (800) aus dem Förderband (400) aufzunehmen.

10. Zuführsystem nach Anspruch 9,
wobei das Bildgebungssystem (800) ausgebildet ist, ausschließlich die Positionen und die Stellungen der Produkte in der erkennbaren Stellung zu erkennen und die Positionen und die Stellungen der Produkte in der nicht erkennbaren Stellung nicht zu erkennen, wobei insbesondere die erkennbare Stellung eine liegende Stellung oder halbliegende Stellung und die nicht erkennbare Stellung eine aufrechtstehende Stellung umfasst.

11. Zuführsystem nach Anspruch 9,
wobei das Bildgebungssystem (800) einen Vertikalbewegungsmechanismus (810, 820) und eine Kamera (830), die an dem Vertikalbewegungsmechanismus (810, 820) befestigt ist, aufweist, wobei der Vertikalbewegungsmechanismus (810, 820) die Kamera (830) derart antreibt, dass diese sich in einer vertikalen Richtung aufwärts und abwärts bewegt, um einen Abstand zwischen der Kamera (830) und den Produkten (10) einzustellen.

12. Zuführsystem nach Anspruch 11,
wobei der Vertikalbewegungsmechanismus (810, 820) einen vertikalen Haltestab (810), auf welchem eine vertikale Gleitschiene ausgebildet ist, und ein Gleitelement (820) aufweist, das auf der vertikalen Gleitschiene zum Gleiten befestigt ist und entlang der vertikalen Gleitschiene nach oben und unten verschiebbar ist; und
wobei die Kamera (830) auf dem Gleitelement (820) befestigt und mit dem Gleitelement (820) in der vertikalen Richtung bewegbar ist.

13. Zuführsystem nach Anspruch 1,
wobei das Zuführsystem ferner ein Schwingungselement aufweist, das die Gleitpassage (700) derart beaufschlagt, dass diese in Schwingung versetzt wird, um sicherzustellen, dass die Produkte (10) in der Gleitpassage (700) ohne Behinderung in den Trichter (100) gleiten.

14. Zuführsystem nach Anspruch 1,
wobei das Förderband (400) einen Normalmodus aufweist, in welchem das Förderband (400) die Produkte (10) mit einer ersten Geschwindigkeit vorwärts befördert, und einen Rücksetz-Modus aufweist, in welchem das Förderband (400) die Produkte (10) mit einer zweiten Geschwindigkeit vorwärts befördert, die höher ist als die erste Geschwindigkeit, derart, dass die Produkte (10) auf dem Förderband (400) über die Gleitpassage rasch zu dem Trichter (100) zurückbefördert werden.

15. Zuführsystem nach Anspruch 1,
wobei der Trichter (100) ein Gehäuse und eine Schublade aufweist, die aus dem Gehäuse entnehmbar ist, um die in dem Trichter (100) verbleibenden Produkte rasch zu entnehmen.

## Revendications

1. Système d'alimentation comprenant :
une trémie (100) adaptée pour recevoir une pluralité de produits (10) de différents types ;
un convoyeur à bande (400) situé au-dessus de la trémie (100) et configuré pour convoyer les produits (10) ; et
un mécanisme de levage (200) adapté pour lever les produits (10) de la trémie (100) sur le convoyeur à bande (400),
dans lequel le mécanisme de levage (200) comprend :
une courroie de transfert (210) circulant selon un chemin annulaire ; et
une pluralité de plaques échelonnées (220) espacées uniformément selon le chemin annulaire de la courroie de transfert (210),
dans lequel les plaques échelonnées (220) sont adaptées pour porter un ou plusieurs des produits (10), et la courroie de transfert (210) est configurée pour entraîner les plaques échelonnées (220) pour qu'elles circulent selon le chemin annulaire de manière à lever les produits (10) de la trémie (100) sur le convoyeur à bande (400),
**caractérisé en ce que** le système d'alimentation comprend en outre un générateur de vibrations adapté pour faire vibre le convoyeur à bande (400) dans au moins une direction de manière à changer les postures d'au moins une partie des produits (10) sur le convoyeur à bande (400) d'une posture non identifiable à une posture identifiable, et **en ce que** le système d'alimentation comprend en outre un passage coulissant (700) disposé obliquement par rapport à un plan horizontal et un déflecteur de guidage (600) disposé obliquement par rapport à une direction de convoyage du convoyeur à bande (400) et adapté pour diriger les produits (10) présents sur le convoyeur à bande (400) dans le passage coulissant (700), dans lequel, quand les produits (10) présents sur le convoyeur à bande (400) sont dirigés dans le passage coulissant (700), les produits (10) peuvent glisser le long du passage coulissant (700) dans la trémie (100) par leur propre poids.

2. Système d'alimentation selon la revendication 1,
dans lequel le mécanisme de levage (200) comprend en outre un rouleau sur lequel la courroie de transfert (210) est tendue et qui peut tourner autour de son axe pour déplacer la courroie de transfert (210) selon le chemin annulaire.

3. Système d'alimentation selon la revendication 2,
dans lequel la courroie de transfert (210) est disposée obliquement par rapport à un plan horizontal de telle sorte qu'un angle inférieur à 90 degrés est formé entre la courroie de transfert (210) et le plan horizontal.

4. Système d'alimentation selon la revendication 3,
dans lequel les plaques échelonnées (220) sont parallèles en direction de la largeur de la courroie de transfert (210) et perpendiculaires à une surface de la courroie de transfert (210).

5. Système d'alimentation selon la revendication 1,
dans lequel le système d'alimentation comprend en outre un filtre de posture de produit (500) adapté pour changer les postures d'au moins une partie des produits (10) sur le convoyeur à bande (400) d'une posture non identifiable à une posture identifiable.

6. Système d'alimentation selon la revendication 5,
dans lequel le filtre de position de produit (500) comprend une butée flexible (530) qui s'étend sur le convoyeur à bande (400) de telle sorte qu'il y a une distance prédéterminée entre la butée flexible (530) et la surface du convoyeur à bande (400), et en particulier la butée flexible (530) est une brosse flexible constituée de poils flexibles ;
dans lequel, quand le produit (10) sur le convoyeur à bande (400) est dans la position identifiable, la hauteur du produit (10) est inférieure ou égale à la distance prédéterminée de telle sorte que le produit (10) n'est pas bloqué par la butée flexible (530) et peut traverser la butée flexible (530) ; et
dans lequel, quand le produit (10) sur le convoyeur à bande (400) est dans la position non identifiable, la hauteur du produit (10) est supérieure à la distance prédéterminée, de telle sorte que le produit (10) est bloqué par la butée flexible (530) et est basculé de la posture non identifiable à la posture identifiable sous l'effet d'une poussée par la butée flexible (530).

7. Système d'alimentation selon la revendication 6,
dans lequel la butée flexible (530) est mobile en direction verticale, de telle sorte que la distance entre la butée flexible (530) et la surface du convoyeur à bande (400) est réglable et de telle sorte que le filtre de posture de produit (500) est applicable à différents produits (10).

8. Système d'alimentation selon la revendication 6,
dans lequel le filtre de posture de produit (500) comprend en outre une paire de colonnes de support (510) disposées sur deux côtés du convoyeur à bande (400) et une barre transversale (520) disposée sur la paire de colonnes de support (510), la butée flexible (530) étant couplée de manière rotative à la barre transversale (520).

9. Système d'alimentation selon la revendication 5,
dans lequel le système d'alimentation comprend en outre un système de vision (800) adapté pour identifier les positions et les postures des produits (10) sur le convoyeur à bande (400), et en particulier le système d'alimentation comprend en outre un manipulateur adapté pour saisir les produits (10) dans la posture identifiable sur le convoyeur à bande (400) sous le guidage du système de vision (800).

10. Système d'alimentation selon la revendication 9,
dans lequel le système de vision (800) est adapté pour identifier uniquement les positions et les postures des produits dans la posture identifiable et non pour identifier les positions et les postures des produits dans la posture non identifiable, et en particulier la posture identifiable comprend une posture couchée ou une posture semi-couchée et la posture non identifiable comprend une posture debout.

11. Système d'alimentation selon la revendication 9,
dans lequel le système de vision (800) comprend un mécanisme de déplacement vertical (810, 820) et une caméra (830) montée sur le mécanisme de déplacement vertical (810, 820), le mécanisme de déplacement vertical (810, 820) entraînant la caméra (830) pour la déplacer vers le haut et vers le bas en direction verticale afin de régler la distance entre la caméra (830) et les produits (10).

12. Système d'alimentation selon la revendication 11,
dans lequel le mécanisme de déplacement vertical (810, 820) comprend une barre de support verticale (810) sur laquelle un rail coulissant vertical est formé et un coulisseau (820) qui est monté de manière coulissante sur le rail coulissant vertical et peut coulisser vers le haut et vers le bas le long du rail coulissant vertical ; et
dans lequel la caméra (830) est montée sur le coulisseau (820) et est mobile en direction verticale avec le coulisseau (820).

13. Système d'alimentation selon la revendication 1,
dans lequel le système d'alimentation comprend en outre un vibrateur qui fait vibrer le passage coulissant (700) pour garantir que les produits (10) présents dans le passage coulissant (700) puissent glisser en douceur dans la trémie (100).

14. Système d'alimentation selon la revendication 1,
dans lequel le convoyeur à bande (400) présente un mode normal dans lequel le convoyeur à bande (400) convoie les produits (10) vers l'avant à une première vitesse, et un mode de dégagement dans lequel le convoyeur à bande (400) convoie les produits (10) vers l'avant à une deuxième vitesse supérieure à la première vitesse de telle sorte que les produits (10) présents sur le convoyeur à bande (400) sont rapidement renvoyés dans la trémie (100) via le passage coulissant (700).

15. Système d'alimentation selon la revendication 1,
dans lequel la trémie (100) comprend un boîtier et un tiroir pouvant être retiré du boîtier pour enlever rapidement les produits restant dans la trémie (100).
